# EUROPÄISCHE PATENTSCHRIFT

(11) **EP 2 656 555 B1**
(45) Veröffentlichungstag und Bekanntmachung des Hinweises auf die Patenterteilung: **27.03.2019**
(21) Anmeldenummer: 12704767.8
(22) Anmeldetag: 14.02.2012
(51) Int. Cl.: H04L 12/40

(54) **STEUERVORRICHTUNG UND STEUERVERFAHREN**
CONTROLLING APPARATUS AND METHOD
DISPOSITIF ET PROCEDE DE COMMANDE

(30) Priorität: 15.02.2011 DE 102011004130
(43) Veröffentlichungstag der Anmeldung: 30.10.2013
(73) Patentinhaber: Siemens Mobility GmbH, 81739 München (DE)
(72) Erfinder: PORSCH, Roland, 95469 Speichersdorf (DE)
(86) Internationale Anmeldenummer: PCT/EP2012/052492
(87) Internationale Veröffentlichungsnummer: WO 2012/110498

(56) Entgegenhaltungen:
- EP-A1- 2 073 451
- JP-A- 4 253 499
- US-A1- 2009 037 929

## Beschreibung

Die Erfindung geht aus von einer Steuervorrichtung zur Durchführung von Steueraufgaben, umfassend mehrere Steuereinheiten, die jeweils dazu vorgesehen sind, zumindest eine Steuerfunktion auszuführen, und eine Datenkommunikationseinrichtung, die zur Herstellung einer Datenkommunikation zwischen den Steuereinheiten vorgesehen ist.

Die Vernetzung von Steuereinheiten zur gemeinsamen Erledigung von Steueraufgaben bei einem übergeordneten System, beispielsweise bei einem Schienenfahrzeug, ist mit zahlreichen Erfordernissen, wie z.B. Skalierbarkeit, Verteilung von Funktionen, Effizienz, Verfügbarkeitserhöhung usw. verbunden. Solche Steuereinheiten sind typischerweise von sogenannten speicherprogrammierbaren Steuerungen gebildet, die zur Erledigung einer Steueraufgabe mit zumindest einem Anwenderprogramm programmiert sind. Hierbei kann unter dem Begriff "Steuerfunktion" ein solches Anwenderprogramm oder eine von diesem Anwenderprogramm aufgerufene Funktion verstanden werden.

Das Zustandekommen der gemeinsamen Steuerung setzt die Herstellung einer Datenkommunikation zwischen den einzelnen Steuereinheiten voraus. In konventionellen Lösungen ist diese Datenkommunikation in Bezug auf die Lokalisierung bzw. Verteilung der einzelnen Daten im Netz fest programmiert. Eine Steuerfunktion, die Daten empfangen bzw. senden soll, muss Kenntnis darüber haben, von welchen anderen Steuerungen oder zu welchen anderen Steuerungen sie die Daten beziehen bzw. senden muss. Des Weiteren werden die Kommunikationskanäle ebenfalls bei der Projektierung fest angelegt und verwaltet. Dies führt zu einem hohen Programmieraufwand und eine geringe Flexibilität in Bezug auf Änderungen in der Verteilung der Steuereinheiten bzw. in der Zusammensetzung der gesamten Steuervorrichtung.

Aus der EP 2 073 451 A1 ist ein Feldbuskommunikationssystem bekannt, mit zwei Teilnehmern und einer gemeinsamen Speichereinrichtung für Schreib- und Lesevorgänge der Teilnehmer.

Der Erfindung liegt die Aufgabe zugrunde, eine gattungsgemäße Steuervorrichtung bereit zu stellen, bei welcher ein verminderter Programmieraufwand und eine höhere Flexibilität in Bezug auf Änderungen erreicht werden können.

Hierzu wird vorgeschlagen, dass die Datenkommunikationseinrichtung dazu vorgesehen ist, einen Speicherbereich zur Verfügung zu stellen, der für Schreib- und Lesevorgänge der einzelnen Steuerfunktionen vorgesehen ist, und mittels des Speicherbereichs eine Datenkommunikation zwischen zumindest einer als Sender dienenden Steuerfunktion und zumindest einer als Empfänger dienenden Steuerfunktion herzustellen. Die Aspekte der Datenkommunikation auf der Seite des Senders und des Empfängers beschränken sich hierdurch vorteilhaft auf lokale Zuweisungen in den Speicherbereich bzw. auf lokale Leseoperationen aus dem Speicherbereich. Weitere Informationen, insbesondere über die Verteilung der Daten im Netz, müssen bei der Programmierung der Steuerfunktionen nicht notwendigerweise berücksichtigt werden. Die Kommunikationsaspekte werden demnach transparent für den Projekteur und die durch ihn programmierte Logik, z.B. mit Hilfe der CFC-Programmiersprache, bzw. das durch ihn programmierte Anwenderprogramm. In der vorgeschlagenen Steuervorrichtung wird das Projektieren bzw. Programmieren der einzelnen Steuerfunktionen von der Datenverteilung getrennt, wobei diese in zwei unterschiedlichen Ebenen, einer Anwendungsebene und einer Kommunikationsebene, verteilt werden. Die Kommunikationsebene oder Kommunikationsschicht, die von der Datenkommunikationseinrichtung zur Verfügung gestellt wird, nimmt aus der Sicht der Anwendungsebene die Form eines virtuellen Speicherbereichs an, auf welchen lokal zugegriffen werden kann.

Eine Anpassung an am zu steuernden System vorgenommene Änderungen kann demnach mit einem besonders geringen Aufwand erfolgen, wodurch die Portabilität erhöht werden kann. Die Kommunikationsaspekte werden auf die Kommunikationsschicht verlagert, welche die aus den verschiedenen Steuereinheiten stammenden Datenpakete miteinander verknüpft und Kenntnis darüber hat, an welcher Steuereinheit ein Datenpaket entstanden ist bzw. an welcher Steuereinheit ein Datenpaket verwendet wird.

Die Datenkommunikationseinrichtung kann verschiedene Implementierungen aufweisen. Sie kann von einer zentralen Einheit gebildet sein, die von den einzelnen Steuereinheiten verschieden ist. Alternativ oder zusätzlich kann die Datenkommunikationseinrichtung von einer oder mehreren Steuereinheiten gebildet sein, die zur Verwaltung der Datenkommunikation eine Kommunikationsschicht oder Kommunikationsebene implementieren.

Unter "vorgesehen" soll insbesondere speziell ausgebildet, ausgestattet, ausgestaltet und/oder programmiert verstanden werden.

Zur Bildung des Speicherbereichs werden Datenbausteine erzeugt, wobei den Steuerfunktionen jeweils zumindest ein Datenbaustein zuordenbar ist und die Datenkommunikationseinrichtung dazu vorgesehen ist, in zumindest einem Datenbaustein durch den Sender geschriebene Daten in zumindest einem dem Empfänger zugeordneten Datenbaustein bereit zu stellen. Dadurch kann eine besonders einfache Übertragungsart erreicht werden. Die Erfindung eignet sich insbesondere für eine Ausbildung der Steuereinheiten als speicherprogrammierbare Steuerungen (SPS).

Die Übertragung von Daten an den Empfänger kann auf verschiedene Weisen erfolgen. Beispielsweise kann die Bereitstellung von Daten für alle Empfänger zyklisch durchgeführt werden. In einer bevorzugten Ausführung wird jedoch vorgeschlagen, dass die Datenkommunikationseinrichtung dazu vorgesehen ist, den Empfänger über das Vorliegen von ihm zugeordneten Daten zu benachrichtigen, wodurch eine zeitoptimierte Datenübertragung erreicht werden kann.

Hängt der Verlauf eines Steuerprozesses von Ausgabedaten einer weiteren, bestimmten Steuereinheit ab, ist in einer weiteren Ausbildung der Erfindung vorteilhaft, wenn die Benachrichtigung die Abgabe von Daten durch einen Sender voraussetzt, der durch den Empfänger bestimmt ist.

Der Verlauf eines Steuerprozesses kann des Weiteren vom Eintreten einer bestimmten Bedingung abhängen, welche die an den Steuerprozess zu übergebenden Daten erfüllen müssen, wie z.B. das Über- bzw. Unterschreiten eines bestimmten Schwellwerts. In diesem Zusammenhang wird eine vorteilhafte Weiterbildung der Erfindung vorgeschlagen, bei welcher die Benachrichtigung das Erfüllen einer Bedingung in Bezug auf die Daten voraussetzt, insbesondere wenn die Bedingung durch den Empfänger bestimmt ist.

Bei Anwendungen, die als sicherheitskritisch charakterisiert werden, ist von Vorteil, wenn die Datenkommunikationseinrichtung dazu vorgesehen ist, die von ihr behandelten Daten zu sichern.

Die zwischen den Steuereinheiten übertragenen Daten können weiter geschützt werden, wenn die Kommunikationseinrichtung dazu vorgesehen ist, die Datenkommunikation zwischen dem Sender und dem Empfänger zu verschlüsseln. Dies ist insbesondere in Bezug auf einen Zugriff auf das Netzwerk mittels eines externen Geräts, wie z.B. eines zu Wartungszwecken eingesetzten mobilen Computers vorteilhaft. Insbesondere werden die Daten mittels eines symmetrischen Verschlüsselungsverfahrens verschlüsselt und wieder entschlüsselt, bei welchem alle Schlüssel der Empfänger dem Sender bekannt sind und nur der Schlüssel des Senders dem Empfänger bekannt ist.

Die erfindungsgemäße Steuervorrichtung eignet sich insbesondere für die Durchführung von Steuerprozessen in einem Schienenfahrzeug, insbesondere bei Triebzügen. Die Steuerung eines Schienenfahrzeugs ist durch eine besonders hohe Anzahl von Steueraufgaben und Steuerkomponenten gekennzeichnet, die sich in ihrer Art und Arbeitsweise voneinander stark unterscheiden und miteinander vernetzt sind. Aufgrund dessen weist die Vernetzung von Steuereinheiten eines Schienenfahrzeugs eine besonders hohe Komplexität auf, die bei deren Projektierung mittels konventioneller Methoden zu einem hohen Programmieraufwand führt. Durch die vorgeschlagene Steuervorrichtung, bei welcher die erforderliche Kommunikation zwischen den Steuereinheiten von der Anwendungsebene der einzelnen Steuerfunktionen entkoppelt ist, kann eine erhebliche Vereinfachung der Projektieraufgabe erreicht werden.

Ferner betrifft die Erfindung ein Verfahren zur Durchführung von Steueraufgaben, insbesondere bei einem Schienenfahrzeug, mittels mehrerer Steuereinheiten zum Ausführen zumindest einer Steuerfunktion, die miteinander vernetzt sind, wobei Daten zwischen den Steuereinheiten übertragen werden.

Es wird vorgeschlagen, dass zumindest ein Speicherbereich zur Verfügung gestellt wird, der für Schreib- und Lesevorgänge der einzelnen Steuerfunktionen vorgesehen ist und dass Daten zwischen zumindest einer als Sender dienenden Steuerfunktion und zumindest einer als Empfänger dienenden Steuerfunktion über den Speicherbereich übertragen werden, wobei zur Bildung des Speicherbereichs Datenbausteine erzeugt werden, den Steuerfunktionen jeweils zumindest ein Datenbaustein zugeordnet wird und in zumindest einem Datenbaustein durch den Sender geschriebene Daten in zumindest einem dem Empfänger zugeordneten Datenbaustein bereitgestellt werden. Zu den Vorteilen und vorteilhaften Wirkungen des Verfahrens wird auf die obigen Ausführungen bezüglich der Steuervorrichtung verwiesen.

Ein Ausführungsbeispiel der Erfindung wird anhand der Figuren erläutert. Es zeigen:
- Figur 1:: eine Steuervorrichtung eines Schienenfahrzeugs, mit einer Vielzahl von Steuereinheiten und einem Datenbus in einer schematisierten Ansicht und
- Figur 2:: eine Datenkommunikation zwischen den Steuereinheiten.

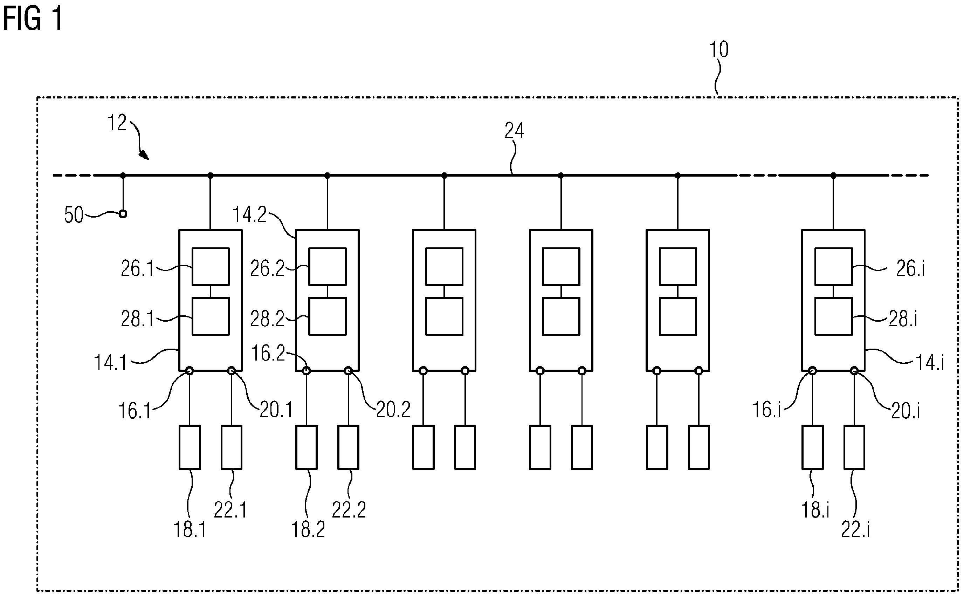

Figur 1 zeigt in einer stark schematisierten Ansicht ein Schienenfahrzeug 10, in welchem eine Steuervorrichtung 12 eingebaut ist. Diese weist eine Vielzahl von Steuereinheiten 14 auf, die jeweils zur Erledigung zumindest einer Steueraufgabe vorgesehen sind. Im betrachteten Ausführungsbeispiel sind die Steuereinheiten 14 jeweils als speicherprogrammierbare Steuerungen ausgebildet. Diese umfassen einen Eingang 16, der mit einer Einheit 18 verbunden ist. Diese Einheit 18 kann insbesondere eine Sensoreinheit sein, die zur Erfassung zumindest einer Kenngröße (z.B. einer Temperaturkenngröße, einer Geschwindigkeitskenngröße, einer Helligkeitskenngröße usw.) vorgesehen ist, wobei alternative Ausbildungen der Einheit 18 möglich sind. Die Steuereinheiten 14 weisen ferner einen Ausgang 20 auf, der mit einer weiteren Einheit 22 verbunden ist. Diese kann insbesondere als Funktionseinheit oder Aktoreinheit ausgebildet sein, die zur Erledigung einer bestimmten Funktion vorgesehen ist. Beispielsweise kann die Einheit 22 eine Anzeigeeinheit zur Anzeige einer Information an einen Fahrgast oder an den Triebfahrzeugführer, ein Klimatisierungsaggregat, ein Beleuchtungssystem, eine Türbetätigungseinrichtung usw. sein. Die Steuereinheiten 14 sind ferner mit einem Fahrzeugbus 24 verbunden, welcher die im Schienenfahrzeug 10 verteilten Steuereinheiten 14 miteinander verbindet. Jede Steuereinheit 14 ist mit einem Anwenderprogramm programmiert, welches in Abhängigkeit des Eingangs 16 und/oder von über den Fahrzeugbus 24 übertragenen Daten den Ausgang 20 und somit die mit ihm verbundene Einheit 22 steuert. Hierzu weisen die Steuereinheiten 14 zumindest eine Recheneinheit 26, insbesondere eine CPU, und einen Arbeitspeicher 28 auf.

Zur Erledigung von Steueraufgaben werden ferner Daten zwischen den einzelnen Steuereinheiten 14 übertragen. Insbesondere können spezielle Steuerprozesse vom Ablauf bzw. von der Erledigung weiterer Steuerprozesse abhängen. Beispielsweise hängt eine Abfahrt des Schienenfahrzeugs 10 von der Bedingung ab, dass ein Türschließvorgang vollständig abgeschlossen wurde. In diesem Beispiel sind mehrere Steuereinheiten 14 an diesem Prozess beteiligt, die zumindest den Türschließeinrichtungen, der Anzeigeinheit des Triebfahrzeugführers und dem Antrieb zugeordnet sind.

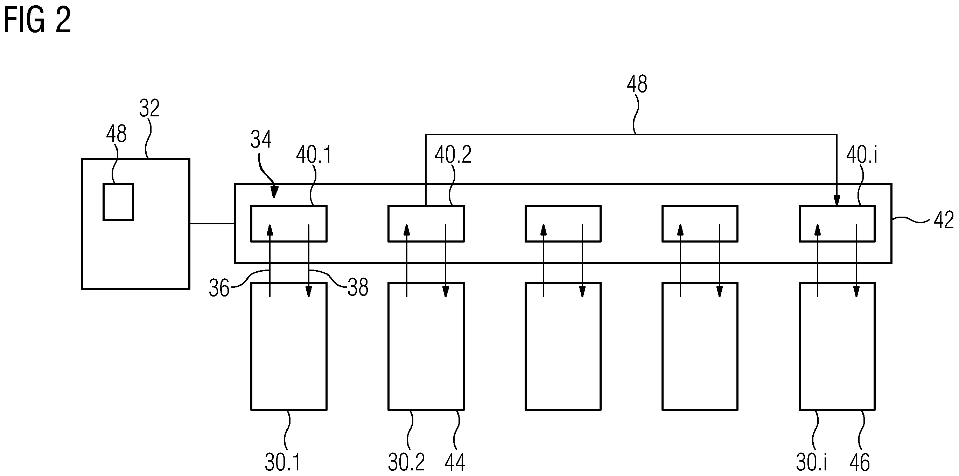

In Figur 2 ist eine Kommunikation zwischen den Steuereinheiten 14 schematisch dargestellt. Es ist für jede Steuereinheit 14 eine Steuerfunktion 30 dargestellt, die von der jeweiligen Steuereinheit 14 bei der Durchführung einer bestimmten Aufgabe oder Teilaufgabe ausgeführt wird. Diese Steuerfunktion 30 kann das auf der jeweiligen Steuereinheit 14 laufende Anwenderprogramm oder eine von diesem Anwenderprogramm aufgerufene Funktion sein.

Zur Abwicklung der Datenkommunikation zwischen den Steuereinheiten 14 weist die Steuervorrichtung 12 eine Datenkommunikationseinrichtung 32 auf. Diese kann von einer speziell dazu vorgesehenen Einrichtung gebildet sein, die von den Steuereinheiten 14 unterschiedlich ist. Alternativ oder zusätzlich kann die Datenkommunikationseinrichtung 32 von einer der Steuereinheiten 14, von einem Verbund mehrerer Steuereinheiten 14 oder von allen Steuereinheiten 14 gebildet sein, die zur Abwicklung der Datenkommunikation speziell programmiert ist bzw. sind.

Die Datenkommunikationseinrichtung 32 stellt für die Steuerfunktionen 30 einen Speicherbereich 34 zur Verfügung, der für Zuweisungs- bzw. Lesevorgänge der Steuerfunktionen 30 vorgesehen ist, wie durch die Pfeile 36, 38 schematisch dargestellt. Der Speicherbereich 34 weist eine Vielzahl von Datenbausteinen 40 auf, die jeweils für lokale Zuweisungs- bzw. Lesevorgänge einer Steuerfunktion 30 erzeugt werden. In der Zeichnung wird für jede Steuerfunktion 30 jeweils ein Datenbaustein 40 dargestellt, es ist jedoch möglich, dass für eine Steuerfunktion 30 mehrere Datenbausteine 40 zur Verfügung gestellt werden.

Ein Datenbaustein 40 kann, auf eine bestimmte Steuerfunktion 30 bezogen, ein für diese Steuerfunktion 30 lokaler Speicherbereich sein oder er kann einem Speicherbereich entsprechen, der nicht lokal erzeugt wird. Der Ursprung der Datenbausteine 40 bzw. deren Verteilung innerhalb der Vernetzung der Steuereinheiten 14 bleiben jedoch für die einzelnen Steuerfunktionen 30 verborgen, wobei der Speicherbereich 34 bzw. die Datenbausteine 40 aus der Sicht der Steuerfunktionen 30 als ein virtueller lokaler Speicher behandelt wird. Bei der Entwicklung von Anwenderprogrammen muss demnach die Verteilung der Datenbausteine 40 in der Vernetzung nicht notwendigerweise berücksichtigt werden.

Die Kenntnis darüber, bei welchen Steuereinheiten 14 Datenbausteine 40 entstehen und Daten aus diesen Datenbausteinen 40 verwendet werden, wird auf die Datenkommunikationseinrichtung 32 verlagert, die die einzelnen Datenbausteine 40 in der Form eines Verwaltungsbausteins 42 miteinander verknüpft. Die Datenkommunikationseinrichtung 32 bildet hiermit eine Kommunikationsschicht, die in Bezug auf die Steuerfunktionen 30 übergeordnet ist.

Mit dieser Kenntnis kann die Kommunikationseinrichtung 32 Daten zwischen den einzelnen Steuerfunktionen 30 bzw. Steuereinheiten 14 kommunizieren. So kann die Kommunikationseinrichtung 32 über den Speicherbereich 34 eine Datenkommunikation 48 zwischen einer Steuerfunktion als Sender 44 und einer weiteren Steuerfunktion als Empfänger 46 herstellen, indem Daten in dem Datenbaustein 40 oder in den Datenbausteinen 40 bereit gestellt werden, der bzw. die diesem Empfänger 46 zugeordnet ist bzw. sind.

Das Bereitstellen der Daten für alle Empfänger kann zyklisch erfolgen. Alternativ oder zusätzlich kann der Empfänger 46 über das Vorliegen von Daten benachrichtigt werden, die ihm zugeordnet sind, bevor das Bereitstellen der Daten erfolgt. Diese Benachrichtigung kann außerdem auf eine ausdrückliche Meldung des Empfängers 46 erfolgen.

Die Benachrichtigung kann des Weiteren das Bereitstellen von Daten betreffen, die durch einen Sender abgegeben worden sind, wobei die Identität des Senders durch den Empfänger bestimmt wird. Dies ist insbesondere bei solchen, weiter oben erwähnten Steuerprozessen von Vorteil, die vom Ablauf weiterer Steuerprozesse abhängen. Im betrachteten Ausführungsbeispiel hat die Steuerfunktion 30.i der Datenkommunikationseinrichtung 32 gemeldet, dass sie über das Vorliegen von Daten, die aus der Steuereinheit 14.2 stammen, benachrichtigt werden will.

Ferner kann die Benachrichtigung von zumindest einer Bedingung abhängen, die von den zu übertragenden Daten zu erfüllen ist. In einer beispielhaften Ausführung der Steuereinheit 14.i als Leistungsregler kann eine von der Steuereinheit 14.i ausgeführte Steuerfunktion 30.i Daten von der Steuereinheit 14.2 verlangen, welche als Steuerung für eine Klimatisierungsaggregat ausgebildet ist. Beispielsweise kann die Steuerfunktion 30.i über eine vom Klimatisierungsaggregat geforderte Leistung nur dann informiert werden, wenn diese Leistung einen bestimmten Schwellwert überschreitet.

Aufgrund der Sicherheitskritikalität der Anwendung in einem Schienenfahrzeug und im Hinblick auf das Erfüllen von Sicherheitsnormen (insbesondere EN 50159) werden die von der Datenkommunikationseinrichtung 32 behandelten Daten gesichert. Hierzu ist diese mit einer Datensicherungseinheit 48 versehen.

Die Steuervorrichtung 12 sieht ferner die Möglichkeit des Zugriffs auf die Vernetzung mittels eines externen Geräts vor, z.B. mittels eines Computers zu Wartungszwecken. Hierzu ist sie mit einer Schnittstelle 50 versehen, siehe Figur 1. Um den Zugang der im Bordnetz erzeugten Daten nur autorisierten Personen zu gewähren ist vorgesehen, dass die Datenkommunikationseinrichtung 32 den Datenverkehr zwischen den Steuereinheiten 14 verschlüsselt. Hierzu werden die Daten auf der Senderseite verschlüsselt und auf der Empfängerseite wieder entschlüsselt, wobei die Verschlüsselungs- und Entschlüsselungsvorgänge gemäß einem symmetrischen Verfahren erfolgen.

## Patentansprüche

1. Steuervorrichtung zur Durchführung von Steueraufgaben, umfassend mehrere Steuereinheiten (14), die jeweils dazu vorgesehen sind, zumindest eine Steuerfunktion (30) auszuführen, und eine Datenkommunikationseinrichtung (32), die zur Herstellung einer Datenkommunikation (48) zwischen den Steuereinheiten (14) vorgesehen ist,
**dadurch gekennzeichnet, dass**
die Datenkommunikationseinrichtung (32) dazu vorgesehen ist, einen Speicherbereich (34) zur Verfügung zu stellen, der für Schreib- und Lesevorgänge der einzelnen Steuerfunktionen (30) vorgesehen ist, und mittels des Speicherbereichs (34) eine Datenkommunikation (48) zwischen zumindest einer als Sender (44) dienenden Steuerfunktion (30.2) und zumindest einer als Empfänger (46) dienenden Steuerfunktion (30.i) herzustellen, wobei zur Bildung des Speicherbereichs (34) Datenbausteine (40) erzeugt werden, den Steuerfunktionen (30) jeweils zumindest ein Datenbaustein (40) zuordenbar ist und die Datenkommunikationseinrichtung (32) dazu vorgesehen ist, in zumindest einem Datenbaustein (40.2) durch den Sender (44) geschriebene Daten in zumindest einem dem Empfänger (46) zugeordneten Datenbaustein (40.i) bereit zu stellen.

2. Steuervorrichtung nach Anspruch 1,
**dadurch gekennzeichnet, dass**
die Datenkommunikationseinrichtung (32) dazu vorgesehen ist, den Empfänger (46) über das Vorliegen von ihm zugeordneten Daten zu benachrichtigen.

3. Steuervorrichtung nach Anspruch 2,
**dadurch gekennzeichnet, dass**
die Benachrichtigung die Abgabe von Daten durch einen Sender (44) voraussetzt, der durch den Empfänger (46) bestimmt ist.

4. Steuervorrichtung nach Anspruch 2 oder 3,
**dadurch gekennzeichnet, dass**
die Benachrichtigung das Erfüllen einer Bedingung in Bezug auf die Daten voraussetzt.

5. Steuervorrichtung nach Anspruch 4,
**dadurch gekennzeichnet, dass**
die Bedingung durch den Empfänger (46) bestimmt ist.

6. Steuervorrichtung nach einem der vorhergehenden Ansprüche,
**dadurch gekennzeichnet, dass**
die Datenkommunikationseinrichtung (32) dazu vorgesehen ist, die von ihr behandelten Daten zu sichern.

7. Steuervorrichtung nach einem der vorhergehenden Ansprüche,
**dadurch gekennzeichnet, dass**
die Kommunikationseinrichtung (32) dazu vorgesehen ist, die Datenkommunikation zwischen dem Sender (44) und dem Empfänger (46) zu verschlüsseln.

8. Steuervorrichtung nach einem der vorhergehenden Ansprüche,
**gekennzeichnet durch**
die Ausbildung als Schienenfahrzeugssteuervorrichtung.

9. Schienenfahrzeug mit einer Steuervorrichtung nach Anspruch 8.

10. Verfahren zur Durchführung von Steueraufgaben, insbesondere bei einem Schienenfahrzeug (10), mittels mehrerer Steuereinheiten (14) zum Ausführen zumindest einer Steuerfunktion (30), die miteinander vernetzt sind, wobei Daten zwischen den Steuereinheiten (14) übertragen werden,
**dadurch gekennzeichnet, dass**
zumindest ein Speicherbereich (34) zur Verfügung gestellt wird, der für Schreib- und Lesevorgänge der einzelnen Steuerfunktionen (30) vorgesehen ist und dass Daten zwischen zumindest einer als Sender (44) dienenden Steuerfunktion (30.2) und zumindest einer als Empfänger (46) dienenden Steuerfunktion (30.i) über den Speicherbereich (34) übertragen werden, wobei zur Bildung des Speicherbereichs (34) Datenbausteine (40) erzeugt werden, den Steuerfunktionen (30) jeweils zumindest ein Datenbaustein (40) zugeordnet wird und in zumindest einem Datenbaustein (40.2) durch den Sender (44) geschriebene Daten in zumindest einem dem Empfänger (46) zugeordneten Datenbaustein (40.i) bereitgestellt werden.

## Claims

1. Control apparatus for performing control tasks,
comprising a plurality of control units (14), which are in each case provided to execute at least one control function (30), and a data communication facility (32), which is provided for creating a data communication (48) between the control units (14),
**characterised in that**
the data communication facility (32) is provided to make available a storage area (34) which is provided for writing and reading processes of the individual control functions (30), and by means of the storage area (34) to create a data communication (48) between at least one control function (30.2) acting as transmitter (44) and at least one control function (30.i) acting as receiver (46), wherein in order to form the storage area (34) data blocks (40) are generated, to which control functions (30) at least one data block (40) can be allocated in each case and the data communication facility (32) is provided to supply data, which is written by the transmitter (44) in at least one data block (40.2), in at least one data block (40.i) allocated to the receiver (46).

2. Control apparatus according to claim 1,
**characterised in that**
the data communication facility (32) is provided to notify the receiver (46) as to the presence of data allocated to it.

3. Control apparatus according to claim 2,
**characterised in that**
the notification presupposes the output of data by a transmitter (44) which is determined by the receiver (46).

4. Control apparatus according to claim 2 or 3,
**characterised in that**
the notification presupposes the fulfilment of a condition relating to the data.

5. Control apparatus according to claim 4,
**characterised in that**
the condition is determined by the receiver (46).

6. Control apparatus according to one of the preceding claims,
**characterised in that**
the data communication facility (32) is provided to secure the data which it handles.

7. Control apparatus according to one of the preceding claims,
**characterised in that**
the communication facility (32) is provided to encrypt the data communication between the transmitter (44) and the receiver (46).

8. Control apparatus according to one of the preceding claims,
**characterised by**
the embodiment as a rail vehicle control apparatus.

9. Rail vehicle with a control apparatus according to claim 8.

10. Method for performing control tasks, in particular in a rail vehicle (10), by means of a plurality of control units (14) for executing at least one control function (30), which are interconnected, wherein data is transferred between the control units (14),
**characterised in that**
at least one storage area (34) is made available, which is provided for reading and writing processes of the individual control functions (30) and that data is transferred via the storage area (34) between at least one control function (30.2) acting as transmitter (44) and at least one control function (30.i) acting as receiver (46), wherein in order to form the storage area (34) data blocks (40) are generated, to which control functions (30) at least one data block (40) is allocated in each case and data, which is written by the transmitter (44) in at least one data block (40.2), is supplied in at least one data block (40.i) allocated to the receiver (46).

## Revendications

1. Système de commande pour effectuer des tâches de commande, comprenant plusieurs unités (14) de commande, qui sont prévues chacune pour exécuter au moins une fonction (30) de commande et un dispositif (32) de communication de données, qui est prévu pour ménager une communication (48) de données entre les unités (14) de commande,
**caractérisé en ce que**
le dispositif (32) de communication de données est prévu pour mettre à disposition une région (34) de mémoire prévue pour des opérations d'écriture et de lecture des diverses fonctions (30) de commande et, au moyen de la région (34) de mémoire, pour ménager une communication (48) de données entre au moins une fonction (30.2) de commande servant d'émetteur (44) et au moins une fonction (30.i) de commande servant de récepteur (46), dans lequel, pour former la région (34) de mémoire, il est produit des modules (40) de données, respectivement, au moins un module (40) de données pouvant être associé aux fonctions (30) de commande et le dispositif (32) de communication de données est prévu pour mettre des données, écrites dans au moins un module (40.2) de données par l'émetteur (44), à disposition dans au moins un module (40.i) de données associé au récepteur (46).

2. Système de commande suivant la revendication 1,
**caractérisé en ce que**
le dispositif (32) de communication de données est prévu pour informer le récepteur (46) de la présence de données, qui lui sont associées.

3. Système de commande suivant la revendication 2, **caractérisé en ce que**
l'information suppose l'émission de données par un émetteur (44), qui est déterminé par le récepteur (46).

4. Système de commande suivant la revendication 2 ou 3,
**caractérisé en ce que**
l'information suppose la satisfaction d'une condition se rapportant aux données.

5. Système de commande suivant la revendication 4,
**caractérisé en ce que**
la condition est déterminée par le récepteur (46).

6. Système de commande suivant l'une des revendications précédentes,
**caractérisé en ce que**
le dispositif (32) de communication de données est prévu pour sécuriser les données qu'il traite.

7. Système de commande suivant l'une des revendications précédentes,
**caractérisé en ce que**
le dispositif (32) de communication est prévu pour chiffrer la communication de données entre l'émetteur (44) et le récepteur (46).

8. Système de commande suivant l'une des revendications précédentes,
**caractérisé par**
la constitution sous la forme d'un système de commande de véhicule ferroviaire.

9. Véhicule ferroviaire ayant un dispositif de commande suivant la revendication 8.

10. Procédé pour effectuer des tâches de commande, notamment pour un véhicule (10) ferroviaire, au moyen de plusieurs unités (14) de commande pour exécuter au moins une fonction (30) de commande, qui sont mises en réseau entre elles, dans lequel on transmet des données entre les unités (14) de commande,
**caractérisé en ce que**
on met à disposition au moins une région (34) de mémoire, prévue pour des opérations d'écriture et de lecture des diverses fonctions (30) de commande et **en ce que** l'on transmet, par l'intermédiaire de la région (34) de mémoire, des données entre au moins une fonction (30.2) de commande servant d'émetteur (44) et au moins une fonction (30.i) de commande servant de récepteur (46), dans lequel on produit, pour former la région (34) de mémoire, des modules (40) de données, on associe aux fonctions (30) de commande, respectivement, au moins un module (40) de données et on met des données, écrites par l'émetteur (44) dans au moins un module (40.2) de données, à disposition dans au moins un module (40.i) de données associé au récepteur (46).
